# EUROPÄISCHE PATENTANMELDUNG

(11) **EP 4 796 443 A1**
(43) Veröffentlichungstag der Anmeldung: **26.08.2026**
(21) Anmeldenummer: 26158422.1
(22) Anmeldetag: 13.02.2026
(51) Int. Cl.: B64D 11/02

(54) **TOILETTENANORDNUNG IN EINEM KABINENBEREICH EINES VERKEHRSFLUGZEUGS**

(30) Priorität: 21.02.2025 DE 102025000647
(71) Anmelder: Airbus Operations GmbH, 21129 Hamburg (DE)
(72) Erfinder: MILES, Tjark, 21129 Hamburg (DE)
(74) Vertreter: LKGLOBAL Partnerschaftsgesellschaft mbB

(57) **Zusammenfassung**

Die vorliegende Erfindung befasst sich mit einer Toilettenanordnung in einem Kabinenbereich eines Verkehrsflugzeugs. Um eine Toilettenanordnung zur Verfügung zu stellen, die sich für Personen mit eingeschränkter Mobilität eignet, ist eine Toilettenanordnung (10) für einen Kabinenbereich eines Verkehrsflugzeugs vorgesehen, die einen Toilettenraum (12) mit einer Toilette und eine Wandanordnung (14) aufweist, die den Toilettenraum an wenigstens zwei Seiten umschließt, mit wenigstens einer ersten Wand (16) und einer zweiten Wand (18), wobei die erste Wand und die zweite Wand aneinander angrenzen und über einen Eckbereich (20) miteinander verbunden sind. In der ersten Wand ist eine erste Öffnung (22) mit einer ersten beweglichen Verschlusseinrichtung (24) als Toilettentür vorgesehen, um einen ersten Zugang zu dem Toilettenraum durch Passagiere zu ermöglichen. In der zweiten Wand ist eine zweite Öffnung (26) mit einer zweiten beweglichen Verschlusseinrichtung (28) als bi-funktionales Wandsegment vorgesehen, das in einem geöffneten Zustand die zweite Öffnung in der zweiten Wand freigibt, um einen zweiten Zugang zu dem Toilettenraum durch Passagiere mit eingeschränkter Mobilität zu ermöglichen.

## Beschreibung

### GEBIET DER ERFINDUNG

Die vorliegende Erfindung befasst sich mit einer Toilettenanordnung in einem Kabinenbereich eines Verkehrsflugzeugs, mit einem Luftfahrzeug und mit einem Verfahren zum Nutzen eines Toilettenraums in einem Kabinenbereich eines Verkehrsflugzeugs durch Passagiere mit eingeschränkter Mobilität.

### HINTERGRUND DER ERFINDUNG

Bei Passagierflugzeugen werden Toiletten an Bord vorgesehen, die den Passagieren in der Regel während des Flugs zur Verfügung stehen. Um auch Personen mit eingeschränkter Mobilität, zum Beispiel Rollstuhlfahrern, eine Nutzung der Toilette zu ermöglichen, ist beispielsweise aus WO 2011/101385 A1 eine Toilettenanordnung bekannt, bei der eine bewegliche Trennwand vorgesehen ist, um zwei separat nutzbare Toilettenräume zu einem erweiterten Toilettenraum zu verbinden. Es hat sich jedoch gezeigt, dass ein zunehmender Bedarf für weitere verbesserte Lösungen besteht.

### ZUSAMMENFASSUNG DER ERFINDUNG

Eine Aufgabe der vorliegenden Erfindung besteht darin, eine Toilettenanordnung zur Verfügung zu stellen, die sich für Personen mit eingeschränkter Mobilität eignet.

Diese Aufgabe wird durch den Gegenstand der unabhängigen Ansprüche gelöst. Weitere Beispiele sind in den abhängigen Ansprüchen angegeben. Die im folgenden beschriebenen Aspekte gelten auch für die Toilettenanordnung in einem Kabinenbereich eines Verkehrsflugzeugs, für das Luftfahrzeug und für das Verfahren zum Nutzen eines Toilettenraums in einem Kabinenbereich eines Verkehrsflugzeugs durch Passagiere mit eingeschränkter Mobilität.

Gemäß der Erfindung ist eine Toilettenanordnung für einen Kabinenbereich eines Verkehrsflugzeugs vorgesehen. Die Toilettenanordnung weist einen Toilettenraum mit einer Toilette und eine Wandanordnung auf, die den Toilettenraum an wenigstens zwei Seiten umschließt, mit wenigstens einer ersten Wand und einer zweiten Wand. Die erste Wand und die zweite Wand grenzen aneinander an und sind über einen Eckbereich miteinander verbunden. In der ersten Wand ist eine erste Öffnung mit einer ersten beweglichen Verschlusseinrichtung als Toilettentür vorgesehen, um einen ersten Zugang zu dem Toilettenraum durch Passagiere zu ermöglichen. In der zweiten Wand ist eine zweite Öffnung mit einer zweiten beweglichen Verschlusseinrichtung als bi-funktionales Wandsegment vorgesehen, das in einem geöffneten Zustand die Öffnung in der zweiten Wand freigibt, um einen zweiten Zugang zu dem Toilettenraum durch Passagiere mit eingeschränkter Mobilität zu ermöglichen.

Daraus ergibt sich eine erweiterte Nutzung des Toilettenraums und bildet somit die Grundlage für einen Toilettenraum, der sich für Passagiere mit eingeschränkter Mobilität eignet. Der zweite Zugang kann beispielsweise größer sein als der erste Zugang über die Toilettentür.

Gemäß einem Beispiel umschließt die zweite bewegliche Verschlusseinrichtung in dem geöffneten Zustand einen Raumbereich außerhalb des Toilettenraums wenigstens teilweise. Dieser Raumbereich bildet eine räumliche Erweiterung des Toilettenraums, zur Nutzung durch Passagiere mit eingeschränkter Mobilität.

Die räumliche Erweiterung bietet zusammen mit dem eigentlichen Toilettenraum einen vergrößerten Raumbereich während der Nutzung der Toilette, zum Beispiel durch einen Passagier mit reduzierter Mobilität, der auf einem Rollstuhl angewiesen ist. Die räumliche Erweiterung wird vorteilhafterweise jedoch nicht zu Lasten der für Passagiersitze verfügbaren Fläche vorgenommen, wenn zum Beispiel ein Ein- und Ausgangsbereich vor einer Rumpftür für die räumliche Erweiterung herangezogen wird. Der vergrößerte Raum erfüllt zum Beispiel die DOT Part 2 PRM Anforderungen des Departments of Transportation.

Das Vorsehen eines zum Beispiel aufschwenkbaren Wandbereichs stellt einen erweiterten Platz zur Verfügung, so dass ein Passagier in einem Rollstuhl von einer Assistenzperson in dem Toilettenraum begleitet werden kann, um zum Beispiel einen assistierten Transfer von dem Rollstuhl auf den Toilettensitz zu ermöglichen.

Die erweiterte Nutzung erfolgt ohne Einfluss auf die sonstige Kabinennutzung.

Als Option ist vorgesehen, dass der Raumbereich außerhalb des Toilettenraums ein Ein- und Ausgangsbereich vor einer Rumpftür ist, der während Reiseflugphasen zur Nutzung als Raumerweiterung zur Verfügung steht.

Der Ein- und Ausgangsbereich vor der Rumpftür hat sozusagen eine doppelte Funktion. Dies erlaubt eine vorteilhafte maximale Ausnutzung des zur Verfügung stehenden Raums.

Gemäß einem Beispiel ist die zweite bewegliche Verschlusseinrichtung an ihrem ersten seitlichen Rand an einem ersten seitlichen Öffnungsrand der zweiten Wand beweglich gehalten. Der erste seitliche Öffnungsrand ist nah am Eckbereich angeordnet. Die zweite bewegliche Verschlusseinrichtung ist in dem geöffneten Zustand an ihrem zweiten seitlichen Rand mit einem Kabinenaußenwandbereich temporär verbindbar.

Daraus ergibt sich zum Beispiel, dass ein möglichst großer Durchgang gebildet werden kann. Das Verbinden mit dem Kabinenaußenwandbereich umschließt den Bereich, der über den Durchgang mit dem Toilettenraum verbunden ist, so dass ein vergrößerter Raumbereich für die Nutzung als Toilettenraum zur Verfügung steht.

Gemäß einem Beispiel ist die zweite bewegliche Verschlusseinrichtung mehrteilig, und weist ein primäres Verschlusselement und ein sekundäres Verschlusselement auf. Das primäre Verschlusselement bildet an einem ersten Rand den ersten seitlichen Rand der zweiten beweglichen Verschlusseinrichtung, mit dem die Verschlusseinrichtung an der zweiten Wand beweglich gehalten ist. Das primäre Verschlusselement ist mit dem sekundären Verschlusselement beweglich verbunden. Das sekundäre Verschlusselement bildet an einem freien Ende den zweiten seitlichen Rand der zweiten beweglichen Verschlusseinrichtung, der mit dem Kabinenaußenwandbereich temporär verbindbar ist.

Die Zweiteiligkeit ermöglicht ein besseres Anpassen der sich ergebenden Raumkontur.

Gemäß einem Beispiel ist das primäre Verschlusselement mit dem ersten Rand schwenkbar an der zweiten Wand gehalten. Das primäre Verschlusselement ist mit einem zweiten Rand, der dem ersten Rand gegenüberliegt, aufschwenkbar. Das sekundäre Verschlusselement ist mit einem ersten Rand schwenkbar an dem primären Verschlusselement gehalten. Das sekundäre Verschlusselement ist mit einem zweiten Rand, der dem ersten Rand gegenüberliegt und der das freie Ende bildet, mit dem Kabinenaußenwandbereich temporär verbindbar.

Als Vorteil ergibt sich daraus zum Beispiel, dass aufgrund der Anordnung der beiden Verschlusselemente in dem aufgeklappten Zustand ein Wandbereich gebildet werden kann, der größer, d.h. in seiner Erstreckung länger ist als in dem eingeklappten Zustand.

Gemäß einem Beispiel weist der zweite Rand des sekundären Verschlusselements eine Randkontur auf, die an eine Krümmung des Kabinenaußenwandbereichs angepasst ist.

Dies bewirkt, dass die Wand möglichst gut an die Außenwand angrenzt, um einen verbesserten Raumabschluss zu bilden.

Gemäß einem Beispiel weist das primäre Verschlusselement einen zweiten Rand auf, der dem ersten Rand des primären Verschlusselements gegenüberliegt. Das sekundäre Verschlusselement ist mit seinem ersten Rand an dem primären Verschlusselement mit einem Abstand zu dem zweiten Rand des primären Verschlusselements schwenkbar gehalten.

Daraus ergibt sich zum Beispiel, dass primäre Verschlusselement eine Randkontur haben kann, die von der Randkontur des sekundären Verschlusselements abweicht.

Gemäß einem Beispiel weist das primäre Verschlusselement an dem zweiten Rand eine Randhöhe als erste Höhe auf. Das primäre Verschlusselement weist in einem Bereich, an dem das primäre Verschlusselement schwenkbar gehalten ist, eine Befestigungshöhe als eine zweite Höhe auf, die größer als die Randhöhe ist.

Das primäre Verschlusselement kann beispielsweise an die Krümmung der Außenwand angepasst sein. Aufgrund des Abstands kann das sekundäre Verschlusselement aber dennoch einen möglichst guten vertikalen Abschluss bilden.

Gemäß einem Beispiel ist das sekundäre Verschlusselement austauschbar. Das sekundäre Verschlusselement ist aus einer Vielzahl von sekundären Verschlusselementen auswählbar, die verschiedene Randkonturen aufweisen.

Gemäß der Erfindung ist auch ein Luftfahrzeug vorgesehen. Das Luftfahrzeug weist einen Rumpfbereich auf, in dem ein Kabinenbereich angeordnet ist. Der Kabinenbereich weist eine Vielzahl an Passagiersitzen und Sanitäreinbauten auf. Wenigstens ein Teil der Sanitäreinbauten ist als eine Toilettenanordnung nach einem der vorhergehenden Beispiele ausgebildet.

Gemäß der Erfindung ist auch ein Verfahren zum Nutzen eines Toilettenraums in einem Kabinenbereich eines Verkehrsflugzeugs durch Passagiere mit eingeschränkter Mobilität vorgesehen. Das Verfahren weist die folgenden Schritte auf:
- Vorsehen einer Toilettenanordnung, die einen Toilettenraum mit einer Toilette und eine Wandanordnung aufweist, die den Toilettenraum an wenigstens zwei Seiten umschließt, mit wenigstens einer ersten Wand und einer zweiten Wand, wobei die erste Wand und die zweite Wand aneinander angrenzen und über einen Eckbereich miteinander verbunden sind; wobei in der ersten Wand eine erste beweglichen Verschlusseinrichtung als Toilettentür vorgesehen ist, um einen ersten Zugang zu dem Toilettenraum zu ermöglichen;
- Bewegen einer zweiten beweglichen Verschlusseinrichtung, die als bi-funktionales Wandsegment in der zweiten Wand vorgesehen ist, in einen geöffneten Zustand, so dass eine Öffnung in der zweiten Wand freigegeben wird, um einen zweiten Zugang zu dem Toilettenraum durch Passagiere mit eingeschränkter Mobilität zu ermöglichen.

Gemäß einem Aspekt der Erfindung ist ein Toilettenraum mit einer zweiten Wandöffnung versehen, die neben einem zweiten Zugang auch eine Öffnung zum Schaffen eines vergrößerten Toilettenraums zur Verfügung stellt, der sich für die Nutzung der Toilette durch einen Passagier in einem Rollstuhl eignet. In einer Option wird der Verschluss der Öffnung im geöffneten Zustand als Wandelement verwendet, um den weiteren Raumbereich zumindest etwas abzugrenzen.

Gemäß einem Aspekt der Erfindung ist bei einem an einer Außenwand neben dem Ein- und Ausstiegsbereich angeordneten Toilettenraum eine zweite Tür vorgesehen, die den Toilettenraum zur Seite hin öffnet und gleichzeitig einen Raumbereich des Ein- und Ausstiegsbereichs gegenüber der Kabine abtrennt, um so einen erweiterten Toilettenraum zu bilden. Aufgrund der Erweiterung und der zusätzlich vorgesehenen seitlichen Zugangsmöglichkeit eignet sich der so geschaffene erweiterte Toilettenraum für die Nutzung durch Passagiere mit eingeschränkter Mobilität. Insbesondere können Passagiere mit eigenem Rollstuhl die Toilette benutzen. Die eigentliche Toilettentür zum Gangbereich hin kann schmal ausgebildet sein, da der Passagier im Rollstuhl die Toilette von der Seite her erreicht.

Es sei darauf hingewiesen, dass die Merkmale der Ausführungsbeispiele der Toilettenanordnung auch für Ausführungsformen des Luftfahrzeugs und des Verfahrens gelten und umgekehrt. Außerdem können auch diejenigen Merkmale frei miteinander kombiniert werden, bei denen dies nicht explizit erwähnt ist.

### KURZE BESCHREIBUNG DER ZEICHNUNGEN

Nachfolgend wird anhand der beigefügten Zeichnungen näher auf Ausführungsbeispiele der Erfindung eingegangen.
Fig. 1 zeigt schematisch ein Beispiel einer Toilettenanordnung in einem Kabinenbereich eines Verkehrsflugzeugs. Die Toilettenanordnung ist in einem vereinfachten Horizontalschnitt gezeigt.
Fig. 2 zeigt schematisch ein Beispiel eines Luftfahrzeugs in einem vereinfachten Horizontalschnitt.
Fig. 3 zeigt Schritte eines Beispiels eines Verfahrens zum Nutzen eines Toilettenraums in einem Kabinenbereich eines Verkehrsflugzeugs durch Passagiere mit eingeschränkter Mobilität.
Fig. 4.1 zeigt ein weiteres Beispiel einer Toilettenanordnung in einem schematischen Grundriss. In Fig. 4.1 ist der Ausgangszustand gezeigt, in welchem die Toilette für Passagiere sozusagen normal nutzbar ist über die zu einem Gangbereich hin angeordnete Toilettentür.
Fig. 4.2 zeigt die Toilettenanordnung aus Fig. 4.1 in einem zweiten Zustand, bei der ein Bereich außerhalb des eigentlichen Toilettenraums über eine zweite Öffnung als räumliche Erweiterung der Toilettenanordnung die Nutzung der Toilette durch einen Passagier mit eingeschränkter Mobilität ermöglicht.
Fig. 4.3 zeigt die Toilettenanordnung aus Fig. 4.2 mit einer ersten Person in einem Rollstuhl als Beispiel eines Passagiers mit eingeschränkter Mobilität, und einer zweiten, assistierenden Person.
Fig. 5 zeigt eine perspektivische Darstellung einer beweglichen Paneelanordnung zum Öffnen und Verschließen der zweiten Öffnung.
Fig. 6 zeigt ein noch weiteres Beispiel einer Toilettenanordnung in einem schematischen Grundriss.

### DETAILLIERTE BESCHREIBUNG VON AUSFÜHRUNGSFORMEN

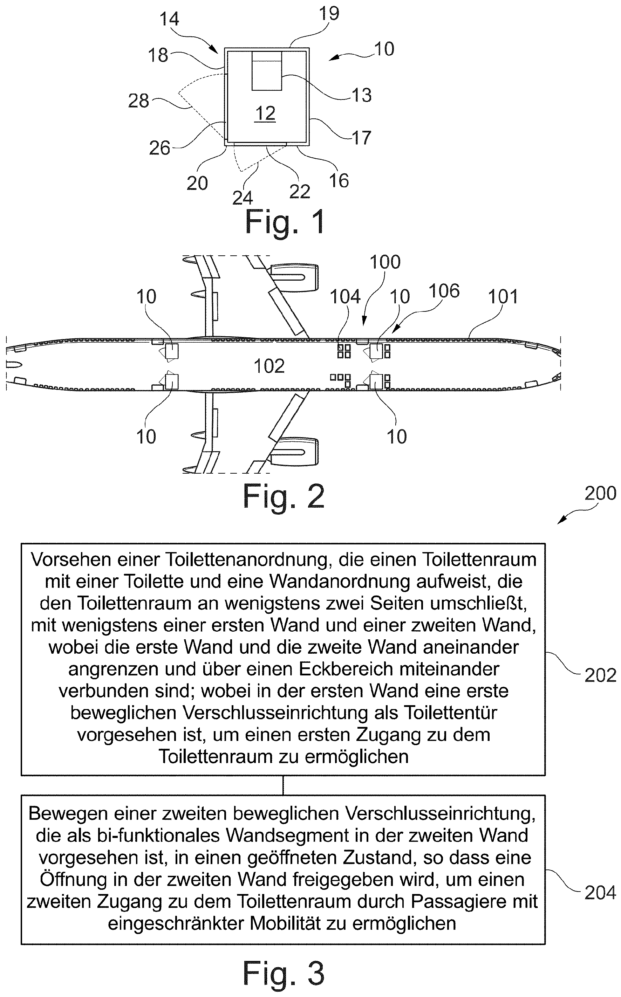

Fig. 1 zeigt schematisch ein Beispiel einer Toilettenanordnung 10 für einen Kabinenbereich eines Verkehrsflugzeugs. Die Toilettenanordnung 10 ist in einem vereinfachten Horizontalschnitt gezeigt. Die Toilettenanordnung 10 weist einen Toilettenraum 12 mit einer Toilette 13 auf und eine Wandanordnung 14, die den Toilettenraum 12 an wenigstens zwei Seiten umschließt. Die Wandanordnung 14 weist wenigstens eine erste Wand 16 und eine zweite Wand 18 auf, wobei die erste Wand 16 und die zweite Wand 18 aneinander angrenzen und über einen Eckbereich 20 miteinander verbunden sind. In der ersten Wand 16 ist eine erste Öffnung 22 mit einer ersten beweglichen Verschlusseinrichtung 24 als Toilettentür vorgesehen, um einen ersten Zugang zu dem Toilettenraum durch Passagiere zu ermöglichen. In der zweiten Wand 18 ist eine zweite Öffnung 26 mit einer zweiten beweglichen Verschlusseinrichtung 28 als bi-funktionales Wandsegment vorgesehen, das in einem geöffneten Zustand die zweite Öffnung 26 in der zweiten Wand 18 freigibt, um einen zweiten Zugang zu dem Toilettenraum durch Passagiere mit eingeschränkter Mobilität zu ermöglichen.

Der Begriff "Toilettenanordnung" bezieht sich auf eine Flugzeugtoilette an Bord eines Luftfahrzeugs, insbesondere an Bord eines Passagierflugzeugs. Die Toilettenanordnung 10 ist zur Benutzung durch die Passagiere vorgesehen, kann aber auch durch die Flugzeugbesatzung, zum Beispiel Flugbegleiter oder Piloten, benutzt werden. Die Toilettenanordnung 10 umfasst wenigstens den einen Toilettenraum 12. In einem Beispiel sind mehrere Toilettenräume zu einer Toilettenanordnung in einer gemeinsamen baulichen Struktur zusammengefasst. Die Toilettenanordnung 10 kann auch Räume umfassen, in denen statt einer Toilette oder zusätzlich ein Urinal vorgesehen ist. Die Toilettenanordnung 10 kann außerdem auch Räume umfassen, in denen nur ein Waschbecken vorgesehen ist. Die Toilettenanordnung 10 kann auch als *Lavatory* oder Toilettenmonument bezeichnet werden.

Der wenigstens eine Toilettenraum 12 der Toilettenanordnung 10 kann zusätzlich mit einem Waschbecken ausgestattet sein.

Der Begriff "Toilettenraum" bezieht sich auf den Raum, der von einer Wandstruktur umschlossen ist.

Der Begriff "Wandanordnung" bezieht sich auf die baulichen Strukturen, die den Toilettenraum umschließen. Die Wandanordnung 14 umfasst zumindest die beiden Wände 16, 18. In einem Beispiel ist noch eine dritte Wand 17 vorgesehen, die an der anderen Seite der ersten Wand 16 anschließt und gegenüber der zweiten Wand 18 angeordnet ist. In der vierten Richtung ist der Toilettenraum 12 zum Beispiel durch eine Innenverkleidung der Außenwand umschlossen. Die dritte Wand ist beispielsweise eine Abschlusswand zu einem Sitzbereich oder die Trennwand zu einem benachbarten weiteren Toilettenraum.

In einem weiteren Beispiel ist eine vierte Wand 19 vorgesehen, die an die zweite Wand 18 anschließt und diese mit der dritten Wand 17 verbindet.

Die Wandanordnung 14 kann auch als Wandungsanordnung, Umschließungsanordnung, Raumumschließungsanordnung oder Raumumschließung bezeichnet werden.

Der Begriff "Wand" bezieht sich auf die Umschließungsfläche, zum Beispiel in Form eines Wandpaneels. Die erste Wand 16 kann auch als erstes Wandsegment bezeichnet werden und die zweite Wand 18 als zweites Wandsegment.

Der Begriff "Öffnung" bezieht sich auf den Durchgang in der Wand, d.h. die Ausnehmung des Wandpaneels, die dafür geeignet ist, dass ein Nutzer in den Toilettenraum 12 eintreten oder wieder austreten kann.

Der Begriff "bewegliche Verschlusseinrichtung" bezieht sich auf das bewegliche Bauteil, mit dem die Öffnung verschließbar ist. Die bewegliche Verschlusseinrichtung kann auch als Tür bezeichnet werden. Die erste bewegliche Verschlusseinrichtung 24 kann auch als erstes Verschlusselement, als primäres bewegliches Verschlusselement, als erste oder primäre Toilettenraumtür oder als erste oder primäre Tür bezeichnet werden. Die zweite bewegliche Verschlusseinrichtung 28 kann auch als zweites bewegliches Verschlusselement, als sekundäres bewegliches Verschlusselement, als zweite oder sekundäre Toilettenraumtür oder als zweite oder sekundäre Tür bezeichnet werden.

Der Begriff "bi-funktionales Wandsegment" bezieht sich darauf, dass die zweite Wand 18 zwei unterschiedliche Funktionen für zwei unterschiedliche Nutzungsszenarien erfüllt. In einem ersten Szenario ist die erste Funktion die einer normalen Wand, wenn der Passagier durch die Toilettentür ein- und austritt. In einem zweiten Szenario ist die zweite Funktion die einer Raumerweiterung, wenn eine Öffnung bereitgestellt wird, die den Toilettenraum um einen weiteren Raumbereich erweitert und so ein vergrößerter Toilettenraum entsteht und der vergrößerte Toilettenraum zur Nutzung durch den Passagier zur Verfügung steht.

In einer ersten Option erfolgt der Zugang zu dem vergrößerten Toilettenraum über einen Zugang zu dem weiteren Raumbereich, zum Beispiel für einen Passagier in einem Rollstuhl. Als Variante kann zusätzlich ein weiterer Zugang hilfsweise über die Toilettentür erfolgen, zum Beispiel für eine Assistenzperson für den Passagier im Rollstuhl.

Der zweite Zugang zu dem Toilettenraum ermöglicht zum Beispiel einen Zugang durch Passagiere mit eingeschränkter Mobilität *(person with reduced mobilty,* PRM) in einem Rollstuhl.

In einer zweiten Option erfolgt der Zugang zu dem vergrößerten Toilettenraum über die Toilettentür.

Die Toilettenanordnung 10 eignet sich sowohl für neue Flugzeuge als auch für die Umrüstung existierender Kabinenstrukturen in vorhandenen Flugzeugen. Das nachträgliche Umrüsten wird auch als Retrofitting bezeichnet.

Die zweite bewegliche Verschlusseinrichtung 28 ist beispielsweise für den Normalbetrieb der Toilette verriegelt, also für den Betrieb mit einem nicht erweiterten Raum. Im Normalbetrieb erfolgt der Zugang über die erste bewegliche Verschlusseinrichtung 24, d.h. über die Toilettentür. Für den Betrieb für einen Passagier mit reduzierter Mobilität und einem höheren Platzbedarf kann die zweite bewegliche Verschlusseinrichtung 28 entriegelt und geöffnet werden. Die zweite bewegliche Verschlusseinrichtung 28 kann in der geöffneten Position wieder vorrübergehend fixiert werden, zum Beispiel an einem Außenwandbereich der Kabine neben der Toilettenanordnung 10.

Der Begriff "Passagiere mit eingeschränkter Mobilität" bezieht sich auf Passagiere, die zum Beispiel auf Unterstützung angewiesen sind, zum Beispiel durch Gehhilfen, Rollatoren oder Rollstühle. An Bord von Flugzeugen können dazu spezielle Rollstühle vorgesehen sein, die in der Regel etwas schmaler sind, sogenannte *On-Board-Wheelchairs* (OBW). Passagiere mit eingeschränkter Mobilität könne aber auch ihre eigenen, persönlichen Rollstühle an Bord verwenden.

In einem Beispiel ist die erste bewegliche Verschlusseinrichtung 24 gegenüber der Toilette 13 vorgesehen; die zweite bewegliche Verschlusseinrichtung 28 ist dann quer dazu vorgesehen. Als Option ist vorgesehen, dass die Toilette 13 mit ihrer Hauptbenutzungsrichtung etwas geneigt in Richtung der zweiten beweglichen Verschlusseinrichtung 28 ausgerichtet ist.

In einem weiteren Beispiel ist die Toilettenanordnung 10 in einem Kabinenbereich eines Verkehrsflugzeugs vorgesehen.

Fig. 2 zeigt schematisch ein Beispiel eines Luftfahrzeugs 100 in einem vereinfachten Horizontalschnitt. Das Luftfahrzeug 100 weist einen Rumpfbereich 101 auf, in dem ein Kabinenbereich 102 angeordnet ist. Der Kabinenbereich 102 weist eine Vielzahl an Passagiersitzen 104 und Sanitäreinbauten 106 auf. Wenigstens ein Teil der Sanitäreinbauten 106 ist als ein Beispiel der Toilettenanordnung 10 nach einem der vorhergehenden Beispiele ausgebildet.

Der Begriff "Kabinenbereich" bezieht sich auf den Bereich innerhalb des Flugzeugrumpfes, in dem die Passagiere untergebracht sind. Der Kabinenbereich 102 ist zum Beispiel durch einen Kabinenboden von einem darunter befindlichen Frachtraum getrennt.

Der Begriff "Sanitäreinbauten" bezieht sich auf die im Kabinenbereich 102 vorgesehenen Einbauten, in denen die Sanitärfunktionen, d.h. die Toiletten, vorgesehen sind. Die Sanitäreinbauten 106 werden auch als Lavatories bezeichnet.

Fig. 3 zeigt Schritte eines Beispiels eines Verfahrens 200 zum Nutzen eines Toilettenraums in einem Kabinenbereich eines Verkehrsflugzeugs durch Passagiere mit eingeschränkter Mobilität. Das Verfahren 200 weist die folgenden Schritte auf:
- In einem ersten Schritt 202 wird eine Toilettenanordnung vorgesehen, die einen Toilettenraum mit einer Toilette und eine Wandanordnung aufweist, welche den Toilettenraum an wenigstens zwei Seiten umschließt, mit wenigstens einer ersten Wand und einer zweiten Wand, wobei die erste Wand und die zweite Wand aneinander angrenzen und über einen Eckbereich miteinander verbunden sind; wobei in der ersten Wand eine erste beweglichen Verschlusseinrichtung als Toilettentür vorgesehen ist, um einen ersten Zugang zu dem Toilettenraum zu ermöglichen; und
- In einem zweiten Schritt 204 wird eine zweite bewegliche Verschlusseinrichtung, die als bi-funktionales Wandsegment in der zweiten Wand vorgesehen ist, in einen geöffneten Zustand bewegt, so dass eine Öffnung in der zweiten Wand freigegeben wird, um einen zweiten Zugang zu dem Toilettenraum durch Passagiere mit eingeschränkter Mobilität zu ermöglichen.

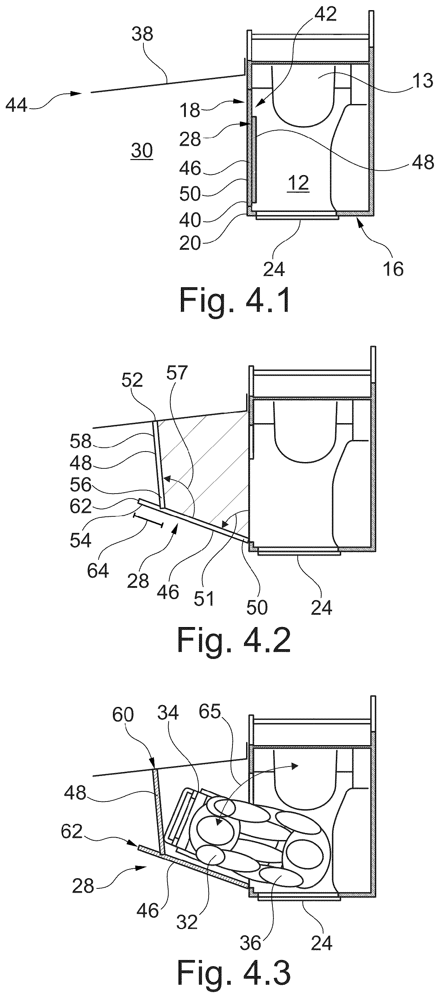

Fig. 4.1 zeigt ein weiteres Beispiel der Toilettenanordnung 10 in einem schematischen Grundriss. In Fig. 4.1 ist der Ausgangszustand gezeigt, in welchem die Toilette 13 für Passagiere sozusagen normal nutzbar ist über die zu einem Gangbereich hin angeordnete Toilettentür. Fig. 4.2 zeigt die Toilettenanordnung 10 aus Fig. 4.1 in einem zweiten Zustand, bei der ein Bereich 30 außerhalb des eigentlichen Toilettenraums 12 über die zweite Öffnung als räumliche Erweiterung der Toilettenanordnung 10 die Nutzung der Toilette 13 durch einen Passagier mit eingeschränkter Mobilität ermöglicht. Fig. 4.3 zeigt die Toilettenanordnung 10 aus Fig. 4.2 mit einer ersten Person 32 in einem Rollstuhl 34 als Beispiel eines Passagiers mit eingeschränkter Mobilität. Außerdem ist eine zweite, assistierende Person 36 gezeigt.

In Fig. 4.1 als Option ist eine Ausführung gezeigt, bei der die zweite bewegliche Verschlusseinrichtung in dem geöffneten Zustand (siehe Fig. 4.2 und Fig. 4.3) den Raumbereich 30 außerhalb des Toilettenraums 12 wenigstens teilweise umschließt. Der Raumbereich 30 bildet eine räumliche Erweiterung des Toilettenraums 12, zur Nutzung durch Passagiere mit eingeschränkter Mobilität. Als Option ist vorgesehen, dass der Raumbereich 30 außerhalb des Toilettenraums 12 ein Ein- und Ausgangsbereich vor einer Rumpftür 38 ist, der während Reiseflugphasen zur Nutzung als Raumerweiterung zur Verfügung steht.

Der Begriff "Raumbereich" bezieht sich auf ein Volumen oder Raumvolumen, das zum Beispiel durch die geöffnete zweite bewegliche Verschlusseinrichtung 28 als Raum definiert wird.

Der Begriff "räumliche Erweiterung" bezieht sich auf einen zusätzlichen Raumteil, der für die Nutzung der Toilette zur Verfügung steht und zusammen mit dem Toilettenraum 12 einen vergrößerten Toilettenraum bildet.

Als Option ist vorgesehen, dass die zweite bewegliche Verschlusseinrichtung 28 an ihrem ersten seitlichen Rand 40 an einem ersten seitlichen Öffnungsrand der zweiten Wand beweglich gehalten ist, wobei der erste seitliche Öffnungsrand nah am Eckbereich 20 angeordnet ist. Die zweite bewegliche Verschlusseinrichtung 28 ist in dem geöffneten Zustand an ihrem zweiten seitlichen Rand 42 mit einem Kabinenaußenwandbereich 44 temporär verbindbar.

Der Begriff "seitlicher Rand" bezieht sich zum Beispiel auf den sich im eingebauten Zustand vertikal erstreckenden Rand oder Randbereich.

Als Option ist vorgesehen, dass die zweite bewegliche Verschlusseinrichtung 28 mehrteilig ist und ein primäres Verschlusselement 46 und ein sekundäres Verschlusselement 48 aufweist. Das primäre Verschlusselement 46 bildet an einem ersten Rand 50 den ersten seitlichen Rand 40 der zweiten beweglichen Verschlusseinrichtung 28, mit dem die zweite Verschlusseinrichtung 28 an der zweiten Wand 18 beweglich gehalten ist. Das primäre Verschlusselement 46 ist mit dem sekundären Verschlusselement 48 beweglich verbunden. Das sekundäre Verschlusselement 46 bildet an einem freien Ende 52 den zweiten seitlichen Rand 42 der zweiten beweglichen Verschlusseinrichtung 28, der mit dem Kabinenaußenwandbereich 44 temporär verbindbar ist.

Der Begriff "mehrteilig" bezieht sich auf wenigstens zwei zueinander bewegliche Teile, zum Beispiel zwei beweglich verbundene Paneele.

Der Begriff "freies Ende" bezieht sich auf das nicht gehaltene Ende, also zum Beispiel das gegenüber einem Scharnier angeordnete Ende. Der Rand des Verschlusselements, der mit dem Scharnier an einer Struktur gehalten ist, wäre dann das "gehaltene Ende".

Das primäre Verschlusselement 46 kann auch als erstes Verschlusselement bezeichnet werden, und das sekundäre Verschlusselement 48 als zweites Verschlusselement. Das primäre Verschlusselement 46 kann auch als Hauptpaneel und das sekundäre Verschlusselement 48 als Zusatzpaneel bezeichnet werden.

Der erste Rand des primären Verschlusselements 46 kann auch als erster primärer Rand oder erster Hauptpaneelrand bezeichnet werden, und der zweite Rand des primären Verschlusselements 46 als zweiter primärer Rand 54 oder zweites Hauptpaneelrand.

Der erste Rand 56 des sekundären Verschlusselements 48 kann auch als erster sekundärer Rand oder erster Zusatzpaneelrand bezeichnet werden, und der zweite Rand 58 des sekundären Verschlusselements 48 als zweiter sekundärer Rand oder zweiter Zusatzpaneelrand.

Das sekundäre Verschlusselement 48 ist an dem primären Verschlusselement 46 beweglich gehalten.

In einem Beispiel ist das primäre Verschlusselement 46 mit dem ersten Rand 50 schwenkbar an der zweiten Wand 18 gehalten, und das sekundäre Verschlusselement 48 ist mit einem ersten Rand des sekundären Verschlusselements 48 schwenkbar an dem primären Verschlusselement 46 gehalten. Das freie Ende des sekundären Verschlusselements 48 bildet dann einen zweiten Rand des sekundären Verschlusselements 48.

Als Option (nicht im Detail gezeigt) ist vorgesehen, dass das sekundäre Verschlusselement 48 ausziehbar an dem primären Verschlusselement 46 gehalten ist.

Der Begriff "ausziehbar" bezieht sich auf eine translatorische Beweglichkeit, die aber auch mit einer Rotationsbewegung kombiniert werden kann.

Als weitere Option ist vorgesehen, dass das primäre Verschlusselement 46 mit dem ersten Rand 50 schwenkbar an der zweiten Wand 18 gehalten ist. Das Aufschwenken ist mit einem ersten Drehpfeil 51 angedeutet. Das primäre Verschlusselement 46 ist mit einem zweiten Rand 54, der dem ersten Rand 50 gegenüberliegt, aufschwenkbar. Das sekundäre Verschlusselement 48 ist mit einem ersten Rand 56 schwenkbar an dem primären Verschlusselement 46 gehalten. Das Aufschwenken ist mit einem zweiten Drehpfeil 57 angedeutet. Das sekundäre Verschlusselement 48 ist mit einem zweiten Rand 58, der dem ersten Rand 56 gegenüberliegt und der das freie Ende bildet, mit dem Kabinenaußenwandbereich 44 temporär verbindbar.

Als weitere Option ist vorgesehen, dass der zweite Rand 58 des sekundären Verschlusselements 48 eine Randkontur 60 aufweist, die an eine Krümmung des Kabinenaußenwandbereichs 44 angepasst ist.

Der Begriff "Randkontur" bezieht sich auf das Profil des Rands bezogen auf die Richtung entlang des Rands.

In einem Beispiel ist der zweite Rand 54 des primären Verschlusselements 46 an die Krümmung des Kabinenwandbereichs angepasst.

Als weitere Option ist vorgesehen, dass das primäre Verschlusselement 46 den einen zweiten Randbereich 62 aufweist, der dem ersten Rand 50 des primären Verschlusselements gegenüberliegt. Das sekundäre Verschlusselement 48 ist mit seinem ersten Rand 56 an dem primären Verschlusselement 46 mit einem Abstand 64 zu dem zweiten Randbereich 62 des primären Verschlusselements 46 schwenkbar gehalten.

Der Begriff "Abstand" bezieht sich auf den Versatz der Schwenkachse zum Rand, bzw. dem zweiten Randbereich 62, des primären Verschlusselements 46. Statt das sekundäre Verschlusselement 48 am äußersten Ende des primären Verschlusselements 46 zu befestigen, ist das sekundäre Verschlusselement 48 sozusagen etwas eingerückt an dem primären Verschlusselement 46 befestigt.

Als Option ist vorgesehen, dass der Abstand 64 ein Abstandsmaß aufweist, das in einem Bereich zwischen einem Fünftel und einem Drittel einer Breite des primären Verschlusselements 46 liegt.

Als weitere Option ist vorgesehen, dass das primäre Verschlusselement 46 an dem zweiten Rand 54 eine Randhöhe als erste Höhe aufweist. Das primäre Verschlusselement 46 weist in einem Bereich, an dem das primäre Verschlusselement 46 schwenkbar gehalten ist, eine Befestigungshöhe als eine zweite Höhe auf, die größer als die Randhöhe ist.

Der Begriff "Randhöhe" bezieht sich auf die Höhe des Verschlusselements am freien Ende, also am äußersten Rand. Der Begriff "Befestigungshöhe" bezieht sich auf die Höhe des Verschlusselements an der Stelle, an der die Befestigung erfolgt, also innerhalb des Paneels bzw. des Verschlusselements. Die Befestigungshöhe kann auch als Feldhöhe bezeichnet werden.

Fig. 4.1 zeigt, wie bereits erwähnt, den Ausgangszustand, bei dem der Toilettenraum 12 über die Toilettentür von einem zum Beispiel längs verlaufenden Gangbereich zugänglich ist.

Fig. 4.2 zeigt den erweiterten Zustand, bei dem der Toilettenraum 12 durch Aufschwenken eines Teils der seitlichen Wand geöffnet ist und die geöffnete Wand gleichzeitig einen Bereich des neben der Toilettenanordnung befindlichen Ein-/ Ausstiegsbereichs als Raumerweiterung teilweise umschließt. Dieser Raumbereich wird auf der Rückseite (in der Figur die obere Seite) von der Kabinenwandung und einer hier angeordneten Rumpftür begrenzt.

Fig. 4.3 zeigt die Stellung der Wandsegmente, bzw. der öffenbaren Panelsegmente in Form der beweglichen Verschlusseinrichtung, aus Fig. 4.2. Der Passagier, d.h. die Person 32 im Rollstuhl, nutzt den erweiterten Raum und wird von der assistierenden Person 36 zum Beispiel dabei unterstützt, vom Rollstuhl auf die Toilette zu transferieren oder von der Toilette auf den Rollstuhl, was mit einem Transferbewegungspfeil 65 angedeutet ist.

Der Transfer wird durch die temporäre Erweiterung des Toilettenraums 12 ermöglicht. Der Transfer wird auch noch dadurch unterstützt, dass der Rollstuhl nicht quer zur Toilette steht, sondern mit einem kleineren Winkel als 90°.

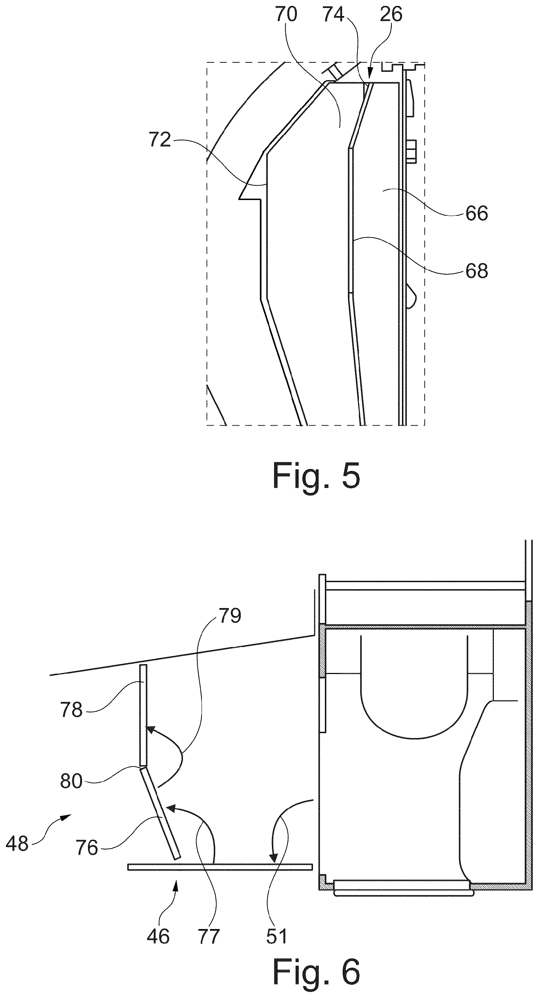

Fig. 5 zeigt eine perspektivische Darstellung einer beweglichen Paneelanordnung zum Öffnen und Verschließen der zweiten Öffnung 26. Ein erstes Paneel 66 bildet die zweite bewegliche Verschlusseinrichtung 28, bzw. das primäre Verschlusselement 46 der zweiten beweglichen Verschlusseinrichtung 28. Das erste Paneel 66 weist einen ersten Rand mit einer ersten Randkontur 68 auf. Ein zweites Paneel 70 bildet das sekundäre Verschlusselement 48 der zweiten beweglichen Verschlusseinrichtung 28. Das zweite Paneel 70 weist eine zweite Randkontur 72 auf. Das zweite Paneel 70 ist mit einer Schwenkachse 74 an dem ersten Paneel 66 schwenkbar gehalten. Die Schwenkachse 74 ist beabstandet zu dem ersten Rand gehalten, so dass die Schwenkachse 74 zum Beispiel auf ganze Höhe des zweiten Paneels erfolgen kann. Der Rand des ersten Paneels 66, d.h. die erste Randkontur 68, ist beispielsweise an die Kontur der Kabinenwand angepasst, um eine möglichst große Öffnung in der zweiten Wand zu ermöglichen. Das zweite Paneel 68 ist nun aber nicht am äußeren Rand befestigt, wo nur ein kürzerer senkrechter Streifen zur Verfügung stehen würde, sondern versetzt an einer Stelle, an der die komplette Höhe des Paneels zur Befestigung zur Verfügung steht.

Der Rand des zweiten Paneels 70, d.h. die zweite Randkontur 72, ist beispielsweise an die Kontur der Kabinenwand angepasst, um einen möglichst guten Anschluss der zweiten Wand an die Kabinenwand oder die Rumpftür zu ermöglichen.

Fig. 6 zeigt ein noch weiteres Beispiel der Toilettenanordnung 10 in einem schematischen Grundriss.

Als Option ist vorgesehen, dass das sekundäre Verschlusselement 48 zweiteilig ist, und einen ersten Teil 76 und einen zweiten Teil 78 aufweist. Der erste Teil 76 und der zweite Teil 78 sind über eine vertikal verlaufende Schwenkachse 80 verbunden.

Das Aufschwenken des ersten Teils 76 in Relation zum primären Verschlusselement 46 ist mit einem dritten Drehpfeil 77 angedeutet. Das Aufschwenken des zweiten Teils 78 in Relation zum ersten Teil 76 ist mit einem vierten Drehpfeil 79 angedeutet.

Als (nicht im Detail gezeigte) Option ist vorgesehen, dass das sekundäre Verschlusselement 48 austauschbar ist. Das sekundäre Verschlusselement 48 ist aus einer Vielzahl von sekundären Verschlusselementen auswählbar, die verschiedene Randkonturen aufweisen.

Der Begriff "austauschbar" bezieht sich auf die Möglichkeit, das sekundäre Verschlusselement 48 auszuwechseln. Das kann mit Werkzeug oder auch werkzeuglos vorgesehen sein.

In einer Variante ist das sekundäre Verschlusselement 48 mit einer austauschbaren Randkontur ausgebildet, wobei die Randkontur aus einer Vielzahl verschiedener Randkonturen auswählbar ist. Das Auswechseln der Randkontur kann mit Werkzeug oder werkzeuglos vorgesehen sein.

Als Vorteil der Austauschbarkeit ergibt sich eine mehr oder weniger universelle Grundkonstruktion der Toilettenanordnung. Nur die Bauteile, die an die Verkleidung der Außenwand anschließen, werden dann entsprechend angepasst.

Die oberhalb beschriebenen Ausführungsbeispiele können in unterschiedlicher Art und Weise kombiniert werden. Insbesondere können auch Aspekte der Vorrichtungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Eine Toilettenanordnung (10) für einen Kabinenbereich eines Verkehrsflugzeugs, die Toilettenanordnung aufweisend:
- einen Toilettenraum (12) mit einer Toilette; und
- eine Wandanordnung (14), die den Toilettenraum an wenigstens zwei Seiten umschließt, mit wenigstens einer ersten Wand (16) und einer zweiten Wand (18), wobei die erste Wand und die zweite Wand aneinander angrenzen und über einen Eckbereich (20) miteinander verbunden sind;
wobei in der ersten Wand eine erste Öffnung (22) mit einer ersten beweglichen Verschlusseinrichtung (24) als Toilettentür vorgesehen ist, um einen ersten Zugang zu dem Toilettenraum durch Passagiere zu ermöglichen; und
wobei in der zweiten Wand eine zweite Öffnung (26) mit einer zweiten beweglichen Verschlusseinrichtung (28) als bi-funktionales Wandsegment vorgesehen ist, das in einem geöffneten Zustand die zweite Öffnung in der zweiten Wand freigibt, um einen zweiten Zugang zu dem Toilettenraum durch Passagiere mit eingeschränkter Mobilität zu ermöglichen.

2. Toilettenanordnung nach Anspruch 1, wobei die zweite bewegliche Verschlusseinrichtung in dem geöffneten Zustand einen Raumbereich (30) außerhalb des Toilettenraums wenigstens teilweise umschließt;
wobei dieser Raumbereich eine räumliche Erweiterung des Toilettenraums bildet, zur Nutzung durch Passagiere mit eingeschränkter Mobilität; und
wobei der Raumbereich außerhalb des Toilettenraums ein Ein- und Ausgangsbereich vor einer Rumpftür ist, der während Reiseflugphasen zur Nutzung als Raumerweiterung zur Verfügung steht.

3. Toilettenanordnung nach Anspruch 1 oder 2, wobei die zweite bewegliche Verschlusseinrichtung an ihrem ersten seitlichen Rand (40) an einem ersten seitlichen Öffnungsrand der zweiten Wand beweglich gehalten ist, wobei der erste seitliche Öffnungsrand nah am Eckbereich angeordnet ist; und
wobei die zweite bewegliche Verschlusseinrichtung in dem geöffneten Zustand an ihrem zweiten seitlichen Rand (42) mit einem Kabinenaußenwandbereich (44) temporär verbindbar ist.

4. Toilettenanordnung nach Anspruch 1, 2 oder 3, wobei die zweite bewegliche Verschlusseinrichtung mehrteilig ist, und ein primäres Verschlusselement (46) und ein sekundäres Verschlusselement (48) aufweist;
wobei das primäre Verschlusselement an einem ersten Rand (50) den ersten seitlichen Rand der zweiten beweglichen Verschlusseinrichtung bildet, mit dem die Verschlusseinrichtung an der zweiten Wand beweglich gehalten ist;
wobei das primäre Verschlusselement mit dem sekundären Verschlusselement beweglich verbunden ist; und
wobei das sekundäre Verschlusselement an einem freien Ende (52) den zweiten seitlichen Rand der zweiten beweglichen Verschlusseinrichtung bildet, der mit dem Kabinenaußenwandbereich temporär verbindbar ist.

5. Toilettenanordnung nach Anspruch 4, wobei das sekundäre Verschlusselement ausziehbar an dem primären Verschlusselement gehalten ist.

6. Toilettenanordnung nach Anspruch 4, wobei das primäre Verschlusselement mit dem ersten Rand schwenkbar an der zweiten Wand gehalten ist; und das primäre Verschlusselement mit einem zweiten Rand (54), der dem ersten Rand gegenüberliegt, aufschwenkbar ist; und
wobei das sekundäre Verschlusselement mit einem ersten Rand (56) schwenkbar an dem primären Verschlusselement gehalten ist; und das sekundäre Verschlusselement mit einem zweiten Rand (58), der dem ersten Rand gegenüberliegt und der das freie Ende bildet, mit dem Kabinenaußenwandbereich temporär verbindbar ist.

7. Toilettenanordnung nach Anspruch 6, wobei der zweite Rand des sekundären Verschlusselements eine Randkontur (60) aufweist, die an eine Krümmung des Kabinenaußenwandbereichs angepasst ist.

8. Toilettenanordnung nach Anspruch 6 oder 7, wobei das primäre Verschlusselement einen zweiten Randbereich (62) aufweist, der dem ersten Rand des primären Verschlusselements gegenüberliegt; und
wobei das sekundäre Verschlusselement 48 mit seinem ersten Rand an dem primären Verschlusselement (46) mit einem Abstand (64) zu dem zweiten Rand des primären Verschlusselements (46) schwenkbar gehalten ist.

9. Toilettenanordnung nach Anspruch 8, wobei der Abstand ein Abstandsmaß aufweist, das in einem Bereich zwischen einem Fünftel und einem Drittel einer Breite des primären Verschlusselements (46) liegt.

10. Toilettenanordnung nach einem der Ansprüche 6 bis 9, wobei das primäre Verschlusselement (46) an dem zweiten Rand eine Randhöhe als erste Höhe aufweist; und
wobei das primäre Verschlusselement in einem Bereich, an dem das primäre Verschlusselement schwenkbar gehalten ist, eine Befestigungshöhe als eine zweite Höhe aufweist, die größer als die Randhöhe ist.

11. Toilettenanordnung nach einem der Ansprüche 4 bis 10, wobei das sekundäre Verschlusselement zweiteilig ist und einen ersten Teil (76) und einen zweiten Teil (78) aufweist; und
wobei der erste Teil und der zweite Teil über eine vertikal verlaufende Schwenkachse (80) verbunden sind.

12. Toilettenanordnung nach einem der Ansprüche 4 bis 11, wobei das sekundäre Verschlusselement austauschbar ist; und
wobei das sekundäre Verschlusselement aus einer Vielzahl von sekundären Verschlusselementen auswählbar ist, die verschiedene Randkonturen aufweisen.

13. Ein Luftfahrzeug (100), aufweisend einen Rumpfbereich (101), in dem ein Kabinenbereich (102) angeordnet ist;
der Kabinenbereich aufweisend:
- eine Vielzahl an Passagiersitzen (104); und
- Sanitäreinbauten (106);
wobei wenigstens ein Teil der Sanitäreinbauten als eine Toilettenanordnung (10) nach einem der vorhergehenden Ansprüche ausgebildet ist.

14. Ein Verfahren (200) zum Nutzen eines Toilettenraums in einem Kabinenbereich eines Verkehrsflugzeugs durch Passagiere mit eingeschränkter Mobilität, wobei das Verfahren die folgenden Schritte aufweist:
- Vorsehen (202) einer Toilettenanordnung, die einen Toilettenraum mit einer Toilette und eine Wandanordnung aufweist, die den Toilettenraum an wenigstens zwei Seiten umschließt, mit wenigstens einer ersten Wand und einer zweiten Wand, wobei die erste Wand und die zweite Wand aneinander angrenzen und über einen Eckbereich miteinander verbunden sind; wobei in der ersten Wand eine erste beweglichen Verschlusseinrichtung als Toilettentür vorgesehen ist, um einen ersten Zugang zu dem Toilettenraum zu ermöglichen; und
- Bewegen (204) einer zweiten beweglichen Verschlusseinrichtung, die als bi-funktionales Wandsegment in der zweiten Wand vorgesehen ist, in einen geöffneten Zustand, so dass eine Öffnung in der zweiten Wand freigegeben wird, um einen zweiten Zugang zu dem Toilettenraum durch Passagiere mit eingeschränkter Mobilität zu ermöglichen.
